# EUROPEAN PATENT APPLICATION

(11) **EP 1 310 343 A1**
(43) Date of publication of application: **14.05.2003**
(21) Application number: 02024992.6
(22) Date of filing: 07.11.2002
(51) Int. Cl.: B29C 45/14, B29C 45/16, B29C 37/00, G03G 15/08

(54) **Composite product and molding method for the same**

(30) Priority: 09.11.2001 JP 2001345003
(71) Applicant: CANON KABUSHIKI KAISHA, Tokyo (JP); Canon Kasei Kabushiki Kaisha, Inashiki-gun, Ibaraki-ken (JP)
(72) Inventor: Sasatani, Yoshiaki, Otha-ku, Tokyo (JP); Abe, Kenshirou, Otha-ku, Tokyo (JP); Watanabe, Masatoshi, Tsukuba-shi, Ibaraki (JP)
(74) Representative: Weser, Wolfgang, Dr. Dipl.-Phys.

(57) **Abstract**

This invention has as its object to provide a composite molded product in which the second and subsequent members can be easily separated from the first member. In order to achieve this object, in the composite molded product made of a plurality of types of resin materials, materials that are not miscible with each other are used as the plurality of types of resin materials. Portions (1, 3) made of different resin materials can be separated from each other.

## Description

### FIELD OF THE INVENTION

The present invention relates to a composite molding technique for integrally obtaining a molded product made of two or more types of resin materials having different compositions in a mold.

### BACKGROUND OF THE INVENTION

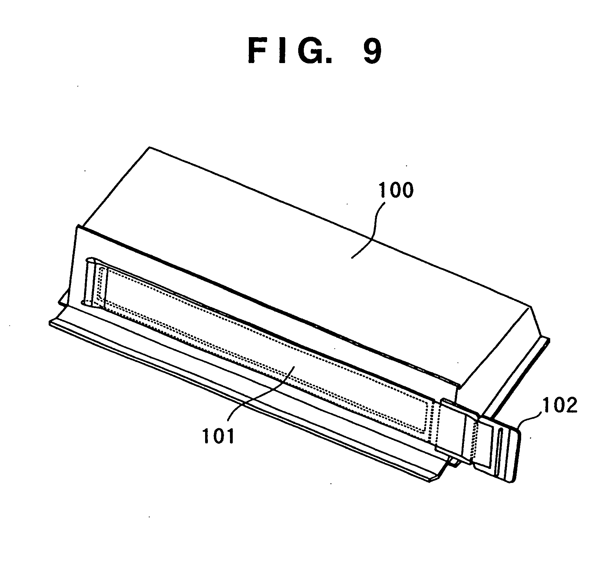

Fig. 9 shows a schematic view of a molded product made of a single resin material as a general prior art. In Fig. 9, reference numeral 100 denotes a container main body; 101, a seal material for closing the opening of the container main body 100; and 102, a tab made of the same resin material as that of the container main body 100.

In the above arrangement, the container main body 100 and tab 102 are integrally molded using the same resin material. Generally, after the container main body 100 and tab 102 are molded by using a general injection molder, the seal material 101 is bonded to the opening of the container main body 100 and the tab 102 by using an adhesion means such as thermal welding.

To use this container, the tab 102 is bent, cut, and separated, and the seal material 101 is removed from the container main body 100, so the container can be used.

When the container main body and the tab are integrally molded using a single resin material of the prior art, to cut and separate the tab from the container, a material that can be cut easily must be selected. Such a material does not always coincide with a material that satisfies the required quality of the container main body.

In order that the tab is easily cut at a predetermined position, a local thin portion needs to be formed, so stress concentration there is promoted. The thinner the local thin portion, the more difficult it is to mold.

When the container is to be used, to improve the visibility by the user, the container and the tab preferably have different tones and colors. If, however, the container and the tab are made of a single resin material and are molded in an ordinary manner, it is generally difficult to change the tone and color between the container and the tab.

When the container and the tab are to be molded separately and are to be integrally assembled in a later step, facilities and steps of assembling them are separately necessary. This increases the cost.

### SUMMARY OF THE INVENTION

The present invention has been made in view of the problems described above, and has as its object to enable the second and subsequent members to be easily separated from the first member.

It is another object of the present invention to couple, in a composite molded product which is separably integrated, the first member and the second and subsequent members with an appropriate strength.

It is still another object of the present invention to perform, in the manufacture of a composite molded product made of a large number of materials, integral molding in a mold, in order to suppress an increase in lead time or cost necessary for the manufacture of the product due to the necessity of a special assembly step or an increase in steps.

In order to solve the above problems and to achieve the above objects, a molding method for a composite molded product according to the present invention is characterized in the following step.

More specifically, there is provided a molding method for a composite molded product, of molding a composite molded product made of a plurality of types of resin materials in a mold integrally. Materials that are not miscible with each other are used as the plurality of types of resin materials.

A composite molded product according to the present invention is characterized in the following arrangement.

More specifically, there is provided a composite molded product made of a plurality of types of resin materials. Materials that are not miscible with each other are used as the plurality of types of resin materials, and portions made of different resin materials are separable.

Other objects and advantages besides those discussed above shall be apparent to those skilled in the art from the description of a preferred embodiment of the invention which follows. In the description, reference is made to accompanying drawings, which form a part hereof, and which illustrate an example of the invention. Such example, however, is not exhaustive of the various embodiments of the invention, and therefore reference is made to the claims which follow the description for determining the scope of the invention.

### BRIEF DESCRIPTION OF THE DRAWINGS

Fig. 1 is a view showing a molded product according to the first embodiment of the present invention;
Fig. 2 is a view showing a molded product according to the second embodiment of the present invention;
Fig. 3 is a view showing a molded product according to the third embodiment of the present invention;
Fig. 4 is a view showing a molded product according to the fourth embodiment of the present invention;
Fig. 5 is a view showing a molded product according to the fifth embodiment of the present invention;
Fig. 6 is a view showing a molded product according to the sixth embodiment of the present invention;
Fig. 7 is a view showing a molded product according to the seventh embodiment of the present invention;
Fig. 8 is a view showing a molded product according to the eighth embodiment of the present invention; and
Fig. 9 is a view for explaining an example of a molded product according to the prior art.

### DETAILED DESCRIPTION OF THE PREFERRED EMBODIMENTS

The preferred embodiments of the present invention will be described in detail with reference to the accompanying drawings.

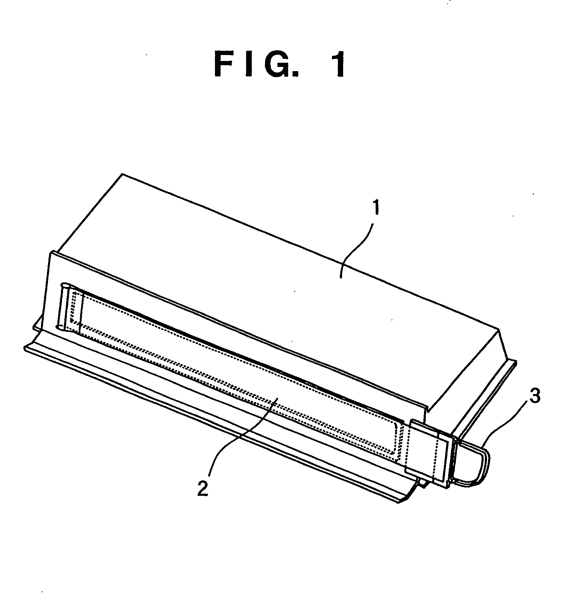

Fig. 1 is a view showing a molded product according to the first embodiment of the present invention. In Fig. 1, reference numeral 1 denotes a container main body made of the first resin material; 2, a seal material which closes the opening of the container main body 1; and 3, a pull-tab made of the second resin material.

The molded product according to this embodiment is a container for storing a toner or ink to be used in an image forming apparatus.

In the above arrangement, the container main body 1 is molded in advance using the first resin material in accordance with a method such as injection molding. Subsequently, the pull-tab 3 is molded using the second resin material which is not miscible with the first resin material, and is coupled at a predetermined position with a predetermined shape to the container main body 1 made of the first resin material. After this, the seal material 2 is adhered to the opening of the container main body 1 and the pull-tab 3 by using a method such as thermal welding, so it is integrated with them.

At this time, when selecting the first and second resin materials that are not miscible with each other, a large number of combinations are possible. For example, when HIPS (high-impact polystyrene) is selected as the first resin material, a resin material such as PP (polypropylene), POM (polyoxymethylene), PA (polyamide), or PC (polycarbonate) can be selected as the second resin material. When PC/ABS (polycarbonate/acrylonitrile-butadiene-styrene) is selected as the first resin material, a resin material such as HDPE (high density polyethylene), PP (polypropylene), or denatured PPE (polyphenylene ether) can be selected as the second resin material. The combinations raised above are merely examples. Many other combinations of inmiscible resin materials are possible, and the present invention is not limited to the above examples.

Several examples are possible as a method of integrating the container main body 1 made of the first resin material and the pull-tab 3 made of the second resin material in the mold. For example, the following method may be possible. The first resin material is filled in the cavity of a mold corresponding to the container main body 1 by using a two-color molder. After that, this cavity is caused to communicate with a cavity corresponding to the pull-tab 3 by a core-back method, a method of moving the cavity, or the like, and the second resin material is filled, so the container main body 1 and the pull-tab 3 are coupled to each other in the mold.

Another method may be possible as follows. Molders and molds for molding the container main body 1 and pull-tab 3 are prepared respectively. The container main body 1 is molded using the first resin material, and is extracted from the mold once. Then, the container main body 1 is inserted in a mold which is to mold the pull-tab 3. The second resin material is filled in the cavity corresponding to the pull-tab 3, so the container main body 1 and the pull-tab 3 are coupled to each other.

It is confirmed that this embodiment is effective for both two-color molding and insert molding described above.

As described above, when materials that are not miscible with each other are selected as the plurality of resin materials to be used, the second and subsequent members can be separated from the first member, and a composite molded product made of a large number of materials can be integrally molded in a mold.

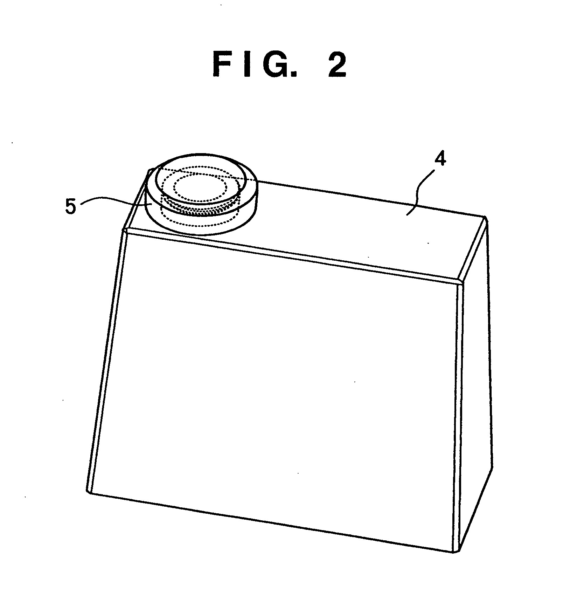

Fig. 2 is a view showing a molded product according to the second embodiment of the present invention. In Fig. 2, reference numeral 4 denotes a container made of the first resin material; and 5, a cap which is made of the second resin material not miscible with the first resin material and which closes the opening of the container 4.

In the above arrangement, the container 4 is molded in advance using the first resin material by injection molding or the like. After that, the second resin material not miscible with the first resin material is filled in the cavity of the cap 5 formed to close the opening of the container 4. Thus, the container 4 and the cap 5 are integrated with each other.

Referring to Fig. 2, for example, when HIPS (high-impact polystyrene) with a shrinkage factor of 0.4% to 0.7% is selected as the first resin material, PP (polypropylene: with a shrinkage factor of 1.0% to 2.5%), PA66 (polyamide 66: with a shrinkage factor of 0.8% to 1.5%), or the like, which has a shrinkage factor larger than that of HIPS can be selected as the second resin material. In this manner, there are many combinations of resin materials having larger shrinkage factors than that of the first resin material. This embodiment is merely an example, and the present invention is not limited to this.

As described above, in a composite molded product made of a large number of materials, resin materials having larger shrinkage factors than that of the first resin material used to form the first member are selected to form the second and subsequent members. When composite molding of integrating the first member and the second and subsequent members in the mold is performed, the differences in shrinkage factor among the first resin material and the second and subsequent resin materials appear as differences in shrinkage amount. This causes appropriate interference at coupling portions among the first member and the second and subsequent members. As a result, a composite molded product which is separable but has an appropriate coupling force can be obtained.

When the differences in shrinkage factor are excessively small, a sufficiently large coupling force cannot sometimes be obtained. The difference in shrinkage factor between the first and second resin materials was examined in this embodiment. When the shrinkage factor of the second resin material was larger than that of the first resin material by about 0.3% to 2.0%, a good result was obtained.

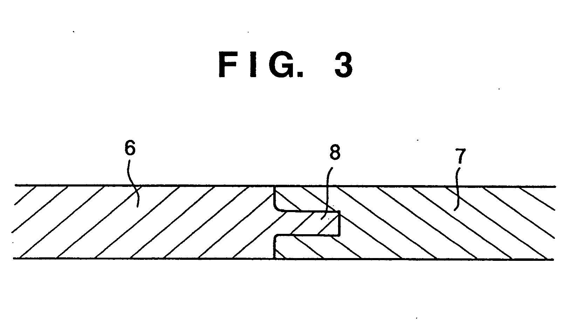

Fig. 3 is a view showing a molded product according to the third embodiment of the present invention. In Fig. 3, reference numeral 6 denotes a first member made of the first resin material; 7, a second member made of the second resin material; and 8, a coupling portion between the first and second members 6 and 7.

In the above arrangement, the first member 6 has a projecting shape at the coupling portion 8 with the second member 7. The second member 7 has, at the coupling portion 8, a recessed shape which sandwiches the projecting shape of the first member 6.

As described above, in a composite molded product made of a large number of materials, the first member made of the first resin material is sandwiched by a member made of the second or subsequent resin material. Thus, a composite molded product which provides a separable shape and has an appropriate coupling force at its coupling portion between the first and second members can be obtained.

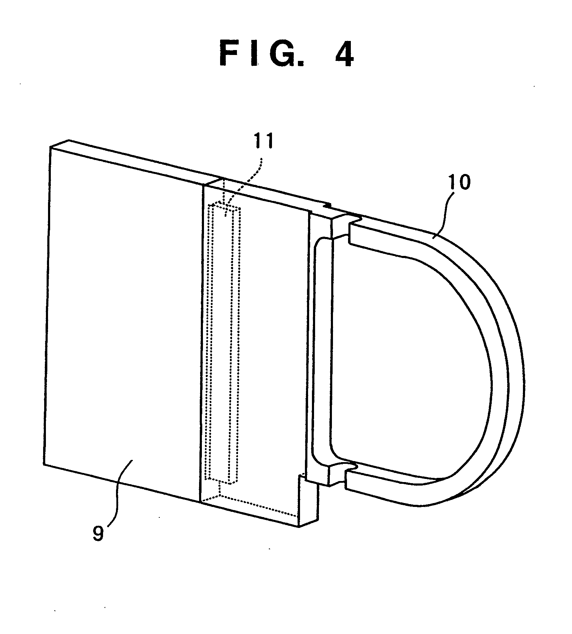

Fig. 4 is a view showing a molded product according to the fourth embodiment of the present invention. In Fig. 4, reference numeral 9 denotes a first member made of the first resin material; 10, a second member made of the second resin material; and 11, a coupling portion between the first and second members 9 and 10.

In the above arrangement, the first member 9 has a rectangular parallelepiped projecting portion at the coupling portion 11 with the second member 10. The second member 10 has a recessed portion which surrounds the coupling portion 11 for coupling the projecting portion of the first member 9.

As described above, in a composite molded product made of a large number of materials, the first member made of the first resin material is surrounded by a member made of the second or subsequent resin material. Thus, a composite molded product which provides a separable shape and has an appropriate coupling force at its coupling portion between the first and second members can be obtained.

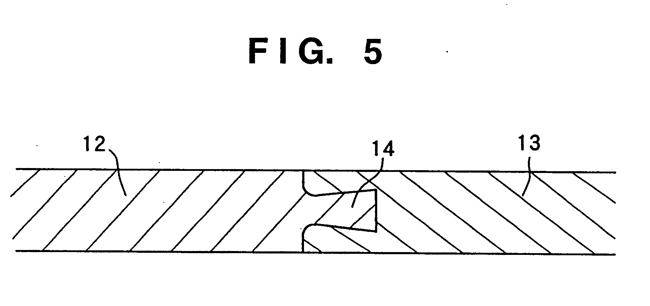

Fig. 5 is a view showing a molded product according to the fifth embodiment of the present invention. In Fig. 5, reference numeral 12 denotes a first member made of the first resin material; 13, a second member made of the second resin material; and 14, a coupling portion between the first and second members 12 and 13.

In the above arrangement, the first member 12 has, at the coupling portion 14 with the second member 13, an inverted tapered undercut shape, the width of which widens toward the distal end. This produces an appropriate coupling force when separating the second member 13 from the first member 12.

In this manner, in a composite molded product made of a large number of materials, a coupling portion between the first member made of the first resin material and a member made of the second or subsequent resin material has an undercut shape. Thus, a composite molded product which provides a separable shape and has an appropriate coupling force at its coupling portion between the first and second members can be obtained.

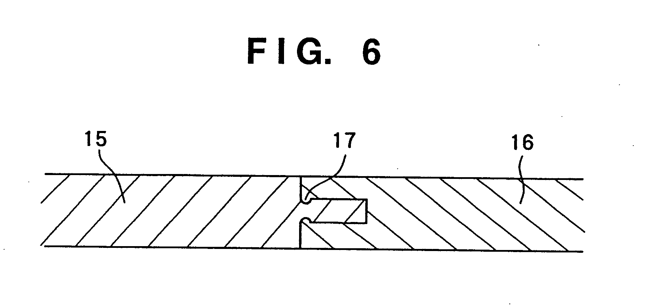

Fig. 6 is a view showing a molded product according to the sixth embodiment of the present invention. In Fig. 6, reference numeral 15 denotes a first member made of the first resin material; 16, a second member made of the second resin material; and 17, a coupling portion between the first and second members 15 and 16.

In the above arrangement, the first member 15 has a recessed undercut shape at the base of the coupling portion 17 with the second member 16. This produces an appropriate coupling force when separating the second member 16 from the first member 15.

In this manner, in a composite molded product made of a large number of materials, a coupling portion between the first member made of the first resin material and a member made of the second or subsequent resin material has an undercut shape. Thus, a composite molded product which provides a separable shape and has an appropriate coupling force at its coupling portion between the first and second members can be obtained.

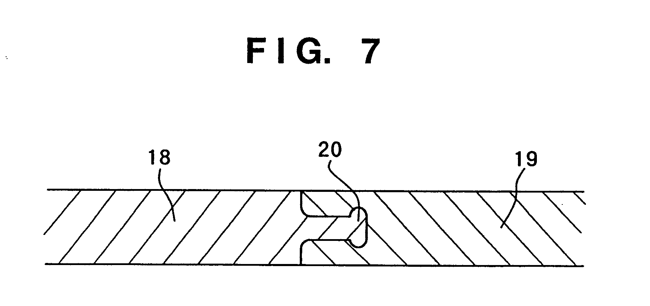

Fig. 7 is a view showing a molded product according to the seventh embodiment of the present invention. In Fig. 7, reference numeral 18 denotes a first member made of the first resin material; 19, a second member made of the second resin material; and 20, a coupling portion between the first and second members 18 and 19.

In the above arrangement, the first member 18 has a projecting undercut shape at the distal end of the coupling portion 20 with the second member 19. This produces an appropriate coupling force when separating the second member 19 from the first member 18.

In this manner, in a composite molded product made of large number of materials, a coupling portion between the first member made of the first resin material and a member made of the second or subsequent resin material has an undercut shape. Thus, a composite molded product which provides a separable shape and has an appropriate coupling force at its coupling portion between the first and second members can be obtained.

In the embodiments shown in Figs. 5 to 7, the first member made of the first resin material has an undercut shape. Obviously, when the second member made of the second resin material has an undercut, an effective coupling force can also be obtained. Hence, the position of the undercut is not limited to those of the above embodiments.

In the embodiments shown in Figs. 5 to 7, the undercut shape in the first member made of the first resin material is formed to cover the two sides of the projection. The undercut shape need not be symmetrical with respect to the center line of the projection. An undercut shape may be formed in only one side of the projection, or an undercut as a combination of a plurality of shapes may be possible. Such undercut is effective in adjusting the coupling force.

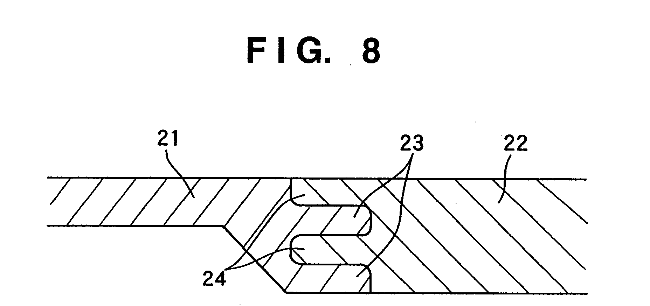

Fig. 8 is a view showing a molded product according to the eighth embodiment of the present invention. In Fig. 8, reference numeral 21 denotes a first member made of the first resin material; 22, a second member made of the second resin material; 23, a plurality of projecting portions projecting from the first member 21; and 24, a plurality of projecting portions projecting from the second member 22.

In the above arrangement, the projecting portions 23 of the first member 21 are in alternate contact with the projecting portions 24 of the second member 22 at the coupling portion between the first and second members 21 and 22. In this embodiment, the number of projecting portions 23 is two and the number of projecting portions 24 is two. The larger the number of projecting portions, the larger the contact area, so the coupling force can be increased.

In this manner, in a composite molded product made of a large number of materials, a coupling portion between the first member made of the first resin material and a member made of the second or subsequent resin material has a plurality of alternate projections made of respective resin materials. Thus, a composite molded product which provides a separable shape and has an appropriate coupling force at its coupling portion between the first and second members can be obtained.

As has been described above, according to the above embodiments, materials that are not miscible with each other are selected as the plurality of resin materials to be used. Thus, the second member can be separated from the first member, and a composite molded product made of a large number of materials can be integrally molded in a mold.

In a composite molded product made of a large number of materials, resin materials having larger shrinkage factors than that of the first resin material used to form the first member are selected to form the second and subsequent members. When composite molding of integrating the first member and the second and subsequent members in the mold is performed, the differences in shrinkage factor among the first resin material and the second and subsequent resin materials appear as differences in shrinkage amount. This causes appropriate interference at the coupling portions among the first member and the second and subsequent members. As a result, a composite molded product which is separable but has an appropriate coupling force can be obtained.

In a composite molded product made of a large number of materials, when the first member made of the first resin material is sandwiched or surrounded by a member made of the second or subsequent resin material, a composite molded product which provides a separable shape and has an appropriate coupling force at its coupling portion between the first and second members can be obtained.

In a composite molded product made of a large number of materials, when a coupling portion between the first member made of the first resin material and a member made of the second or subsequent resin material has an undercut shape, a composite molded product which provides a separable shape and has an appropriate coupling force at its coupling portion between the first and second members can be obtained.

In a composite molded product made of a large number of materials, when a coupling portion between the first member made of the first resin material and a member made of the second or subsequent resin material has a plurality of alternate projections made of respective resin materials, a composite molded product which provides a separable shape and has an appropriate coupling force at its coupling portion between the first and second members can be obtained.

The present invention is not limited to the above embodiments and various changes and modifications can be made within the spirit and scope of the present invention. Therefore, to apprise the public of the scope of the present invention the following claims are made.

## Claims

1. A molding method for a composite molded product, of molding a composite molded product made of a plurality of types of resin materials in a mold integrally,
**characterized in that** materials that are not miscible with each other are used as the plurality of types of resin materials.

2. The method according to claim 1, **characterized in that** resin materials having different shrinkage factors are used as the plurality of types of resin materials.

3. The method according to claim 2, **characterized in that** one of the plurality of types of resin materials has a shrinkage factor which is larger than that of another one of the plurality of types of resin materials by 0.3% to 2.0%.

4. The method according to claim 1, **characterized in that** a coupling portion is molded such that a first portion which is molded using one of the plurality of types of resin materials is sandwiched or surrounded by a second portion which is molded using another one of the plurality of types of resin materials.

5. The method according to claim 4, **characterized in that** an undercut shape is formed in the coupling portion.

6. The method according to claim 4, **characterized in that** a plurality of projections that are interdigitated with each other are formed on the first and second portions of the coupling portion.

7. The method according to claim 1, **characterized in that** the composite molded product is a molded product which is used to form a container-like body comprising a container for storing an object to be stored, a closing material for closing an opening of the container, and a removing member used to remove the closing member from the container, and the container and the removing member are integrally molded using different resin materials that are not miscible with each other.

8. The method according to claim 7, **characterized in that** the container is a container which is to store toner or ink to be used in an image forming apparatus.

9. A composite molded product made of a plurality of types of resin materials,
**characterized in that** materials that are not miscible with each other are used as the plurality of types of resin materials, and portions made of different resin materials are separable.

10. The product according to claim 9, **characterized in that** resin materials having different shrinkage factors are used as the plurality of types of resin materials.

11. The product according to claim 10, **characterized in that** one of the plurality of types of resin materials has a shrinkage factor which is larger than that of another one of the plurality of types of resin materials by 0.3% to 2.0%.

12. The product according to claim 9, **characterized in that** a coupling portion is molded such that a first portion which is molded using one of the plurality of types of resin materials is sandwiched or surrounded by a second portion which is molded using another one of the plurality of types of resin materials.

13. The product according to claim 12, **characterized in that** an undercut shape is formed in the coupling portion.

14. The product according to claim 12, **characterized in that** a plurality of projections that are interdigitated with each other are formed on the first and second portions of the coupling portion.

15. The product according to claim 9, **characterized in that** the composite molded product is a molded product which is used to form a container-like body comprising a container for storing an object to be stored, a closing material for closing an opening of the container, and a removing member used to remove the closing member from the container, and the container and the removing member are integrally molded using different resin materials that are not miscible with each other.

16. The product according to claim 15, **characterized in that** the container is a container which is to store toner or ink to be used in an image forming apparatus.
